# EUROPEAN PATENT APPLICATION

(11) **EP 2 299 116 A1**
(43) Date of publication of application: **23.03.2011**
(21) Application number: 09011870.4
(22) Date of filing: 17.09.2009
(51) Int. Cl.: F04B 39/00, F04B 39/02, F04B 39/10, F16C 19/10, F16C 33/58

(54) **Compressor and refrigerator**

(71) Applicant: Panasonic Corporation, Kadoma-shi Osaka 571-8501 (JP)
(72) Inventor: Kita, Ichiro, Osaka-shi Osaka 540-6207 (JP)
(74) Representative: Eisenführ, Speiser & Partner

(57) **Abstract**

The present invention refers to a compressor which comprises: a hermetic container, a compression element and an electric element accommodated in the hermetic container, the compression element being operable to compress refrigerant; and a thrust ball bearing accommodated in the hermetic container, the thrust ball bearing supporting the shaft rotatably, the thrust ball bearing including a plurality of balls; the electric element including a shaft rotating as to drive the compression element at a predetermined operation frequency; a stator and a rotor fixed with the shaft, wherein the compression element being located on the upper side, and the electric element being located on the lower side; and wherein the rotor magnetic center being positioned to the direction offsetting the stator magnetic center which makes the additional load to the thrust ball bearing by the magnetic force. The present invention also refers to a refrigerator using the compressor.

## Description

### TECHNICAL FIELD

The present invention refers to a compressor, and more specifically to a reciprocating hermetic compressor including an axial rolling bearing and motor arrangements as well as a refrigerator using the compressor.

### BACKGROUND ART

In a compressor including a thrust ball bearing, it is said tat the thrust ball bearing preferably includes a smaller number of rolling elements in order to reduce friction for improving its efficiency.

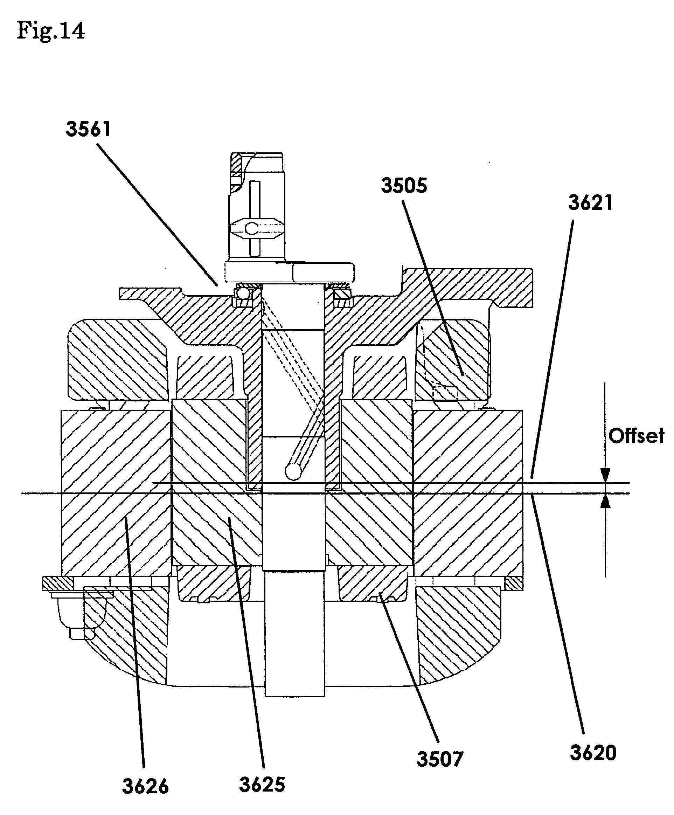

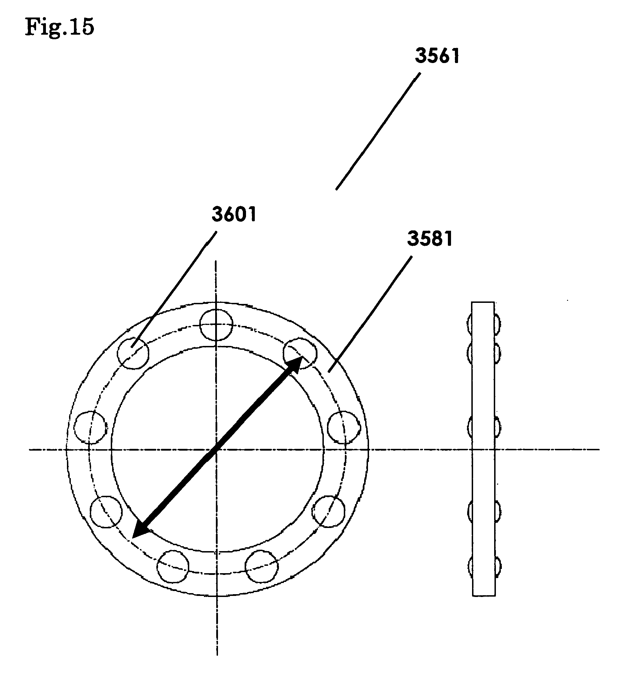

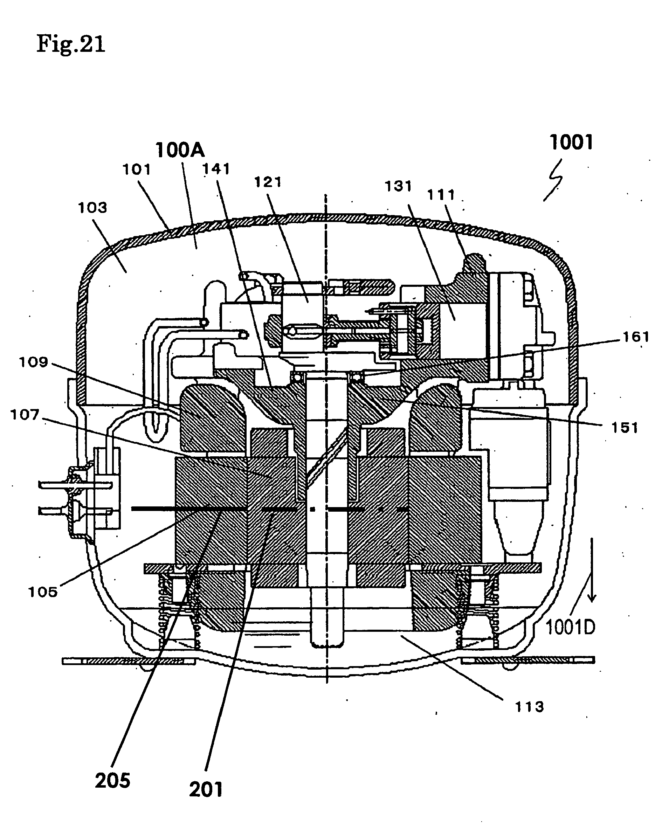

Fig.21 is a cross-sectional view of conventional compressor 1001 disclosed in International Patent Publication WO2007/037072 A1. Fig.14 and Fig.15 are an enlarged view and a cross-sectional view of a thrust ball bearing.

A hermetic container 101 accommodates an electric element 109 including a stator 105 and a rotor 107, and a compression element 111. The hermetic container 101 is filled with refrigerant 103 and stores refrigerator oil 113 therein.

The rotor 107 rotates at a supplied commercial frequency or plural frequencies from an inverter controller.

The compression element 111 includes a shaft 121 fixed with the rotor 107, a cylinder block 141 providing a compression space 131, and a bearing hub 151 that is provided at the cylinder block 141 and that axially supports the shaft 121, thus providing a reciprocating compressor. A thrust ball bearing 161 is provided between the bearing hub 151 and the shaft 121.

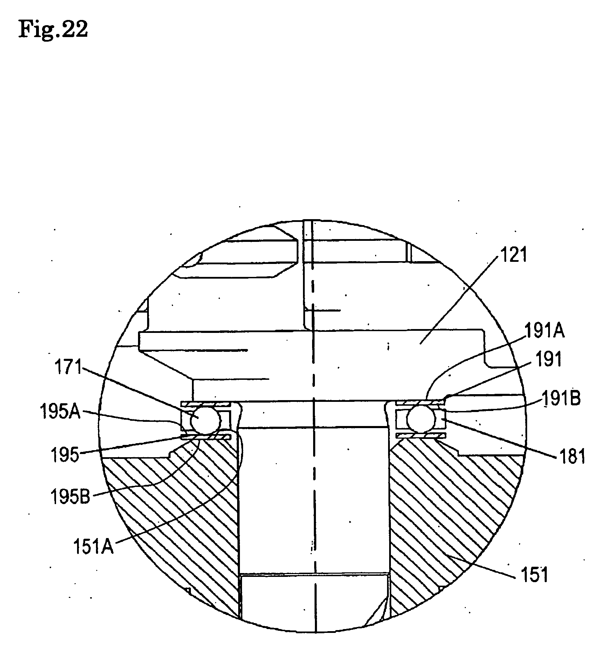

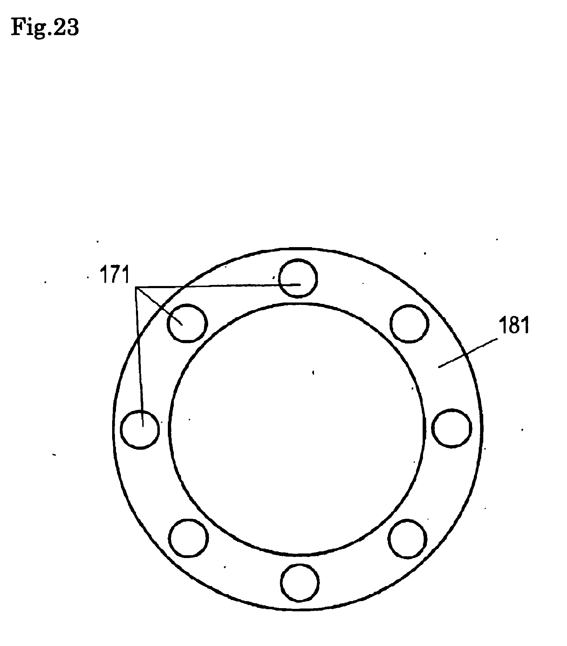

Fig.22 is an enlarged cross-sectional view of the compressor 1001. Fig.23 is an enlarged view of the thrust ball bearing 161. The thrust ball bearing 161 includes balls 171, a circular cage 181 for retaining the balls 171, an upper washer 191 provided on the balls 171, and a lower washer 195 provided under the balls 171. An upper surface 191 A of the upper washer 191 contacts the shaft 121. A lower surface 195B of the lower washer 195 contacts the bearing hub 151. The thrust ball bearing is provided in a space 101 A of the hermetic container 101.

A magnetic center of the rotor 107 is a rotor magnet center 201 indicated as a chain dotted line in Fig.21, and a magnetic center of the stator 105 is a stator magnet center 205 indicated as line in Fig.21. In a conventional compressor the rotor magnet center 201 and the stator magnet center 205 are located in same plane.

An operation of the compressor 1001 will be described below.

When stator 105 is energized by the supplied power of the power source, the rotor 107 rotates together with the shaft 121. This rotation causes compressor 1001 to compress the refrigerant 103 in the compression space 131.

The balls 171 of the thrust ball bearing 161 supports a load due to weights of the rotor 107 and the shaft 121 in vertical direction 1001 D. The upper surface 191A of the upper washer 191 contacts the shaft 121 via the refrigerator oil 113. The lower surface 195B of the lower washer 195 contacts the upper end portion 151A of the bearing hub 151 via the refrigerator oil 113.

The balls 171 rotates between the lower surface 191B of the upper washer 191 and the upper surface 195A of the lower washer 195 during the rotation of the rotor 107. Thus, the balls 171 rotate at the rotating speed, half of the rotating speed of the rotor 107. A rolling friction coefficient is about 1/10 to 1/20th smaller than a sliding friction coefficient without a thrust ball bearing.

But as the conventional compressor 1001 has an arrangement that the rotor magnet center 201 and the stator magnet center 205 are located in the same plane, during the rotating operation the rotor magnet center 201 is slightly moving toward the thrust ball bearing 161 direction. And during the operation of the compressor 1001 assembly, it is difficult to adjust the rotor magnet center 201 and the stator magnet center 205. That means, in some distribution of the assembly, it may occur that the rotor magnet center 201 is located lower direction (that means against the thrust ball bearing 161 direction) than the stator magnet center 205.

When the rotor magnet center 201 is located under the stator magnet center 205, a magnet force is occurred in the direction pulling up the rotor 107 to the upper direction reducing the load of the thrust ball bearing 161 by the weight of the rotor 107 and the shaft 121. When the load of the thrust ball bearing 161 is thus reduced, the balls 171 may suffer from some of the stopping effect, and it is difficult to keep smooth rolling of all the balls 171. When some of the balls 171 have stops, this may cause some and will increase the wear on the lower surface 191B and/or the upper surface 191A. This leads to the possibility of problems of reliability and also of performance reduction of the thrust ball bearing 161 of the conventional compressor 1001.

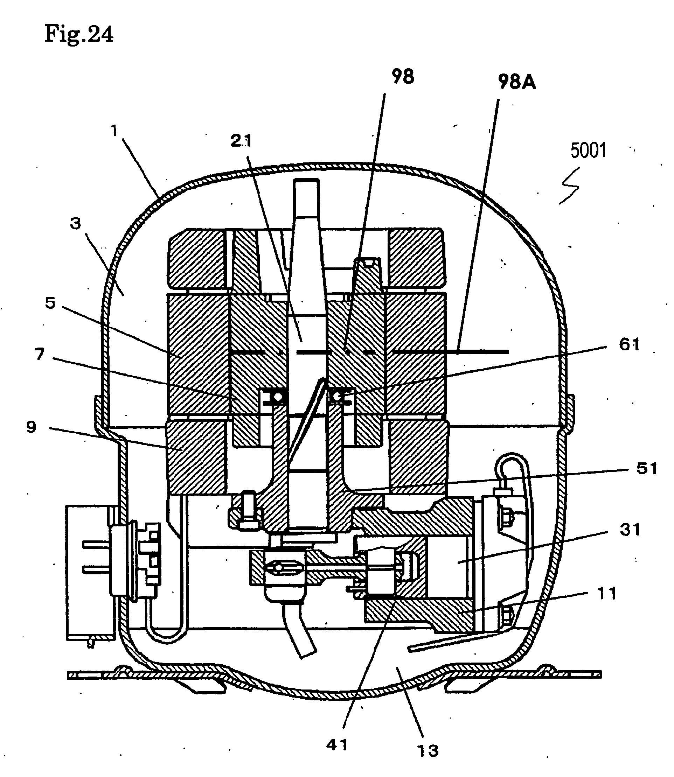

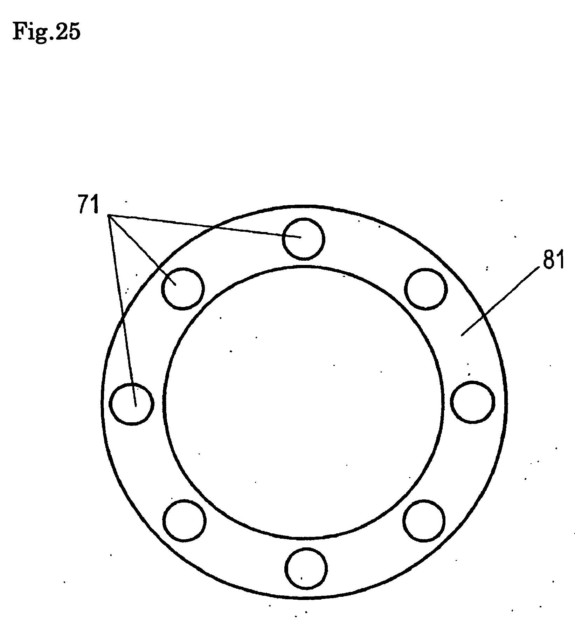

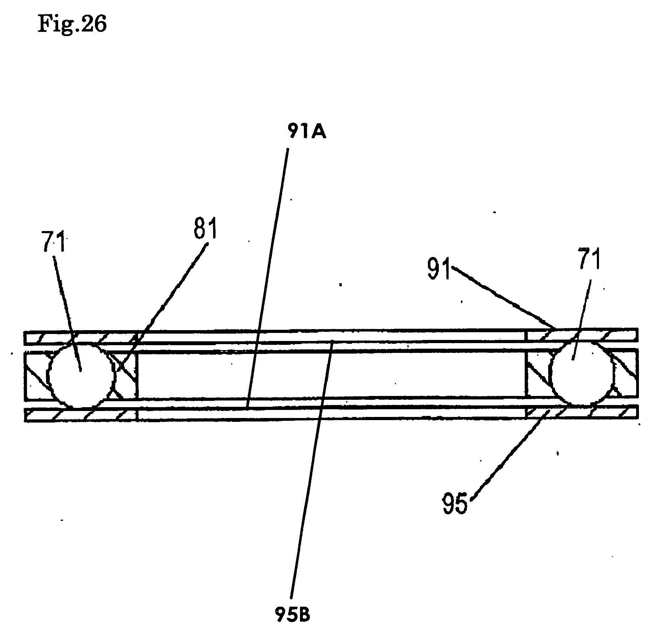

Fig.24 is a cross-sectional view of a conventional compressor 5001 disclosed in Japanese Patent Laid-Open Publication No.61-53474. Fig.25 and Fig.26 are an enlarged view and a cross-sectional view of thrust ball bearing 61 of compressor 5001, respectively.

A hermetic container 1 is filled with a refrigerant 3. An electric element 9 includes a stator 5 and a rotor 7 connected to an external power source. The hermetic container 1 accommodates the electric element 9 and a compression element 11 driven by the electric element 9 and stores refrigerator oil 13 therein.

The compression element 11 includes a shaft 21 fixed to the rotor 7, a cylinder block 41 providing compression space 31, and bearing hub 51 that is provided at cylinder block 41 and that axially supports a shaft 21, thus providing a reciprocating-type compressor.

A thrust ball bearing 61 is provided between the bearing hub 51 and the shaft 21 via the rotor 7. A thrust ball bearing 61 includes balls 71, a circular cage 81 for retaining balls 71, and an upper washer 91 and a lower washer 95 which are provided at upper and lower sides of the balls 71, respectively.

An operation of the compressor 5001 will be described below.

When the stator is energized by the external power source, the rotor 7 rotates together with the shaft 21 in a vertical direction, and reduces a frictional force produced between the rotor 7 and the bearing hub 51. This improves an efficiency of the compressor 5001.

But as the conventional compressor 5001 is arranged such that the rotor magnet center 98 and the stator magnet center 98A are located in same plane, during the rotating operation the rotor magnet center 98 is slightly moving toward the opposite side of thrust ball bearing 61 direction. And during manufacturing the compressor 5001 assembly, it is difficult to adjust the rotor magnet center 98 and stator magnet center 98A. That means, in some particular assemblies it may occur that the rotor magnet center 98 is located in a lower direction (that means in the thrust ball bearing 61 direction) than the stator magnet center 98A.

When the rotor magnet center 98 is located under the stator magnet center 98A, a magnet force is occurred in the direction pulling up the rotor 7 to the upper direction thereby reducing the load of the thrust ball bearing 61 by the weight of the rotor 7 and the shaft 21. When the load of the thrust ball bearing 61 is decreased, the balls 71 may suffer from some stopping effect, and it is difficult to keep smooth rolling of the all balls 71. When some of the balls 71 have stops, this may cause some damage like the wear on the lower surface 95B and/or upper surface 91A. This leads to the possibility of problems of reliability and also of performance reduction of the thrust ball bearing 61 of the conventional compressor 5001.

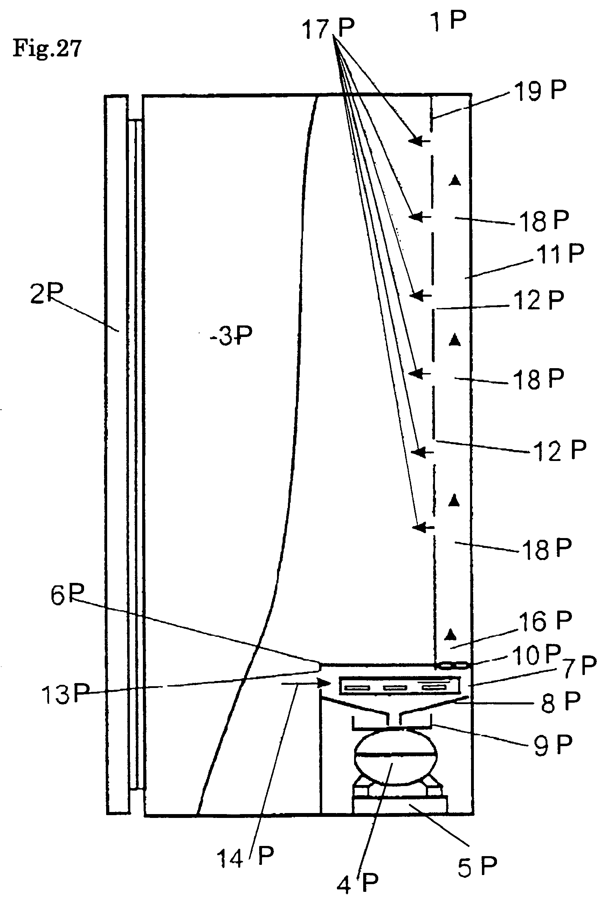

Fig.27 is a part-cross-sectional view of conventional refrigerator disclosed in International Patent Publication WO2001/065190 A1.

Referring to Fig.27 refrigerator has the cabinet 1 P and a door 2P enclosing the cabinet 1 P. This is a single temperature refrigerator, having only a produce compartment 3P. A compressor 4P is mounted on a compressor tray 5P in a compressor enclosure 6P at the lower back portion of the refrigerator cabinet 1 P. An evaporator 7P is mounted above a condensate collection guide 8P. The condensate collection guide 8P emits collected condensate onto an evaporation tray 9P mounted on the top of the compressor 4P. A fan 10P draws an air flow over the evaporator 7P, and expels it into a vertically extending distribution duct rearward of the produce compartment 3P. The distribution duct 11 P has a series of air flow openings 12P into the produce compartment 3P. An opening 13P is provided at a lower part of the produce compartment for air intake to the evaporator chamber. Thus when air is circulated by the fan 10P it passes into the evaporator chamber as indicated by an arrow 14P across the evaporator as indicated by an arrow 15P out past the fan as indicated by an arrow 16P and up through the distribution duct as indicated by arrows 18P to exit into the produce compartments base as indicated by arrows 17P.

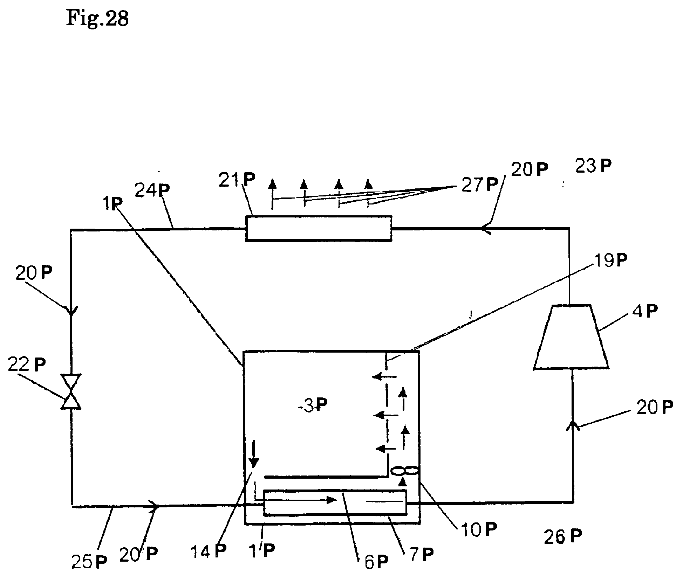

Referring then to Fig.28 this represents the refrigeration system incorporated in the refrigerator of Fig.27 in a diagrammatic form. The refrigeration system comprises a compressor 4P, a condenser 21 P, a flow control valve or capillary tube 22P and an evaporator 7P in series connection.

These components are all well known in the art. They are connected by connecting tubes 23P, 24P, 25P and 26P, through which the gas or liquid refrigerant travels as indicated by arrows 20P.

The refrigeration system is run in the conventional manner except that the system is configured such that the evaporator 7P is run as previously referred to at a temperature which is at only or just below.

Air is supplied by the fan 10P through the duct 11P at the back of the refrigerator between the baffle 19P and the rear face of the cabinet 1 P to reach the produce compartment 3P.

Recently according to the higher demand of environmental protection, the refrigerator also requires energy savings. To reduce the energy consumption, it is the best way to use higher efficiency compressor 4P. The higher efficiency compressor 4P has the construction of the lower friction loss construction, one of them is the thrust ball bearing, and also the compressor is the inverter compressor or synchronous motor compressor.

But when the compressor uses the thrust ball bearing, it needs the higher reliability avoiding the wear of the thrust ball bearing portion. If the wear of the thrust ball bearing has happened, the flow control valve or the capillary tube 22P may be damaged or plugged by the wear powder, and this reduces the refrigeration performance of the compressor, like increasing the energy consumption or reducing the temperature control stability.

Also the wear of the thrust ball bearing may cause compressor noise may lead to refrigerator noise, directly from the compressor and also transmitted by the compressor tray 5P and/or evaporation tray 9P and/or connecting tubes 23P, 24P, 25P and 26P.

Furthermore, in recent years, by the demand of the global environmental protection, it is requiring to reduce the energy consumption and effective resource use.

In order to meet those demands, the compressor also needs improvement of the efficiency using the thrust ball bearing to reduce friction losses.

However, when the weight of a rotor and a shaft or etc. is reduced, by the demand of the reducing use of the resource, there are problems of the wear of the balls and or of the noise from the balls and washers.

With the conventional technology, it is necessary to reduce the number of the balls in order to secure the stability rotation of the rotation of the balls, so that the load is decrease by the rotor and the shaft weights.

When the number of the balls is reduced, this may causes a reduction of the supporting points between the washer and the balls, therefore a smooth rotation is obstructed.

And also reducing the number of the balls modifies the biased load on the balls, thereby generating the wear of the balls and the rubbing sound of the washer and the balls.

It is not proposed a technology which gives a proper load on the balls without decreasing the number of the balls.

### SUMMARY OF THE INVENTION

It is therefore an object of the present invention to provide a compressor as well as a refrigerator using the compressor wherein the wear of the ball bearing is reduced and smooth operation and a prolonged lifetime is obtained.

According to the present invention this object is accomplished by a compressor as well as a refrigerator using the compressor as set out in the appended claims.

According to the present invention a compressor comprises:
A hermetic container, a compression element and an electric element accommodated in the hermetic container, the compression element being operable to compress refrigerant; and a thrust ball bearing accommodated in the hermetic container, the thrust ball bearing supporting the shaft rotatably, the thrust ball bearing including a plurality of balls; the electric element including a shaft rotating as to drive the compression element at a predetermined operation frequency; a stator and a rotor fixed with shaft, wherein the rotor magnetic center being positioned to the direction offsetting the stator magnetic center which makes the additional load to the thrust ball bearing by the magnetic force.

The compressor and refrigerator using this compressor according to the present invention also refers to the technology in conjunction with an energy consumption reduction and noise reduction, and further a reliability improvement can be obtained.

The present invention is further elucidated by the following figures and examples, which are not intended to limit the scope of the invention. The person skilled in the art will understand that various embodiments may be combined.

### BRIEF DESCRIPTION OF THE DRAWINGS

Fig.1 is a cross-sectional view of compressor according to the first embodiment of the present invention.
Fig.2 is an enlarged cross-sectional view of the compressor according to the first embodiment.
Fig.3 is a part enlarged cross-sectional view of a part of Fig.2.
Fig.4 is a part cross-sectional view of a part of the compressor according to the first embodiment.
Fig.5aa is a rotor magnet center distribution according to a conventional compressor.
Fig.5ab is a thrust ball bearing load according to the conventional compressor.
Fig.5ba is a rotor magnet center distribution of the compressor according to the first embodiment.
Fig.5bb is a thrust ball bearing load of the compressor according to the first embodiment.
Fig.6 is a noise level of the compressor according to the first embodiment in comparison to the conventional compressor.
Fig.7 is a cross-sectional view of the compressor according to the second embodiment of the present invention.
Fig.8 is an enlarged cross-sectional view of Fig.7.
Fig.9 is a part enlarged cross-sectional view of a part Fig.8.
Fig.10 is a cross-sectional view of refrigerator according to the third embodiment of the present invention.
Fig.11 is the refrigeration system incorporated in the refrigerator of Fig.10.
Fig.12 is a cross-sectional view of compressor provided with the refrigerator of Fig.10.
Fig.13 is a cross-sectional view of compressor according to the forth embodiment.
Fig.14 is an enlarged cross-sectional view of the compressor.
Fig.15 is a thrust ball bearing of Fig.14.
Fig.16 is an enlarged cross-sectional view of a part of Fig.14.
Fig.17 is the graph showing that the balls slipping area and non-slipping area.
Fig.18 is a graph of life time of the thrust ball calculation curve with the thrust load and varying number of the balls.
Fig.19 is a cross-sectional view of a part of the compressor's compression element according to the fifth embodiment.
Fig.20a is a slipping prevent material using thin sheet.
Fig.20b is the enlarged surface of A of Fig.20a.
Fig.21 is a cross-sectional view of a conventional compressor disclosed in International Patent Publication WO2007/037072 A1.
Fig.22 is an enlarged view and the cross-sectional view of thrust ball bearing.
Fig.23 is an enlarged view and the cross-sectional view of thrust ball bearing.
Fig.24 is a cross-sectional view of a conventional compressor disclosed in Japanese Patent Laid-Open Publication No.61-53474.
Fig.25 is an enlarged view and a cross-sectional view of the thrust ball bearing of compressor.
Fig.26 is an enlarged view and a cross-sectional view of the thrust ball bearing of compressor.
Fig.27 is a part-cross-sectional view of a conventional refrigerator disclosed in International Patent Publication WO2001/065190A1.
Fig.28 represents the refrigeration system incorporated in the refrigerator of Fig.27.

### BRIEF DESCRIPTION OF THE PREFERRED EMBODIMENTS

### First Embodiment

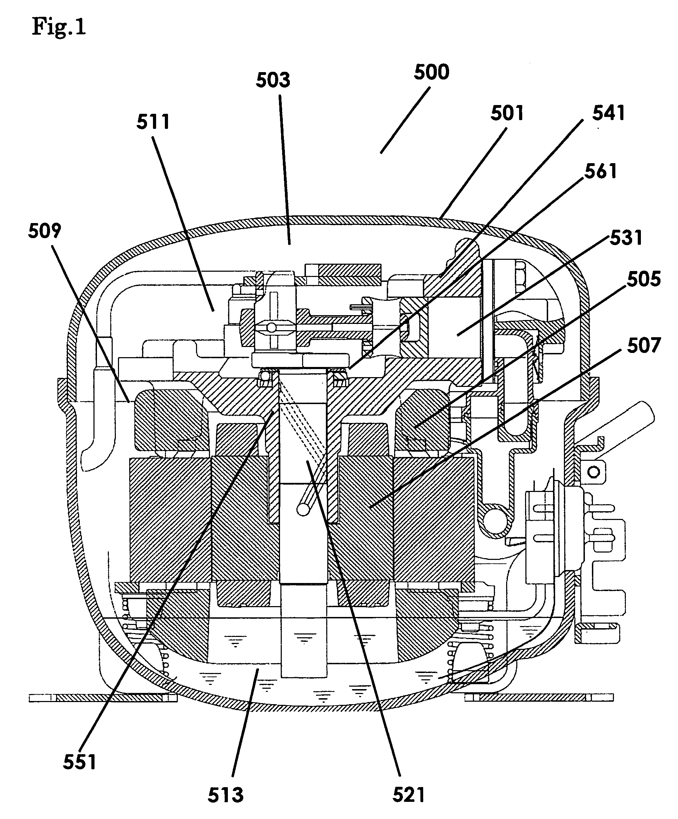

Fig.1 is a cross-sectional view of a compressor 500 according to the first embodiment of the present invention.

A hermetic container 501 accommodates an electric element 509 including a stator 505 and a rotor 507, and a compression element 511 driven by the electric element 509. The electric element 509 is connected to an electric outlet through a stating device etc...

The hermetic container 501 is filled with a refrigerant 503 and stores refrigerator oil 513 therein. Recently, according to an environmental protection, it is common to use natural gases like R600a, carbon dioxide, etc. and HFC-based refrigerant like R134a, and newest HFO refrigerant like R1234yf.

The compression element 511 includes a shaft 521 fixed with the rotor 507, a cylinder block 541 providing a compression space 531, and a bearing hub 551 that is provided at the cylinder block 541 and that axially supports the shaft 521, thus providing a reciprocating-type compressor. A thrust ball bearing 561 is provided between the bearing hub 551 and the shaft 521.

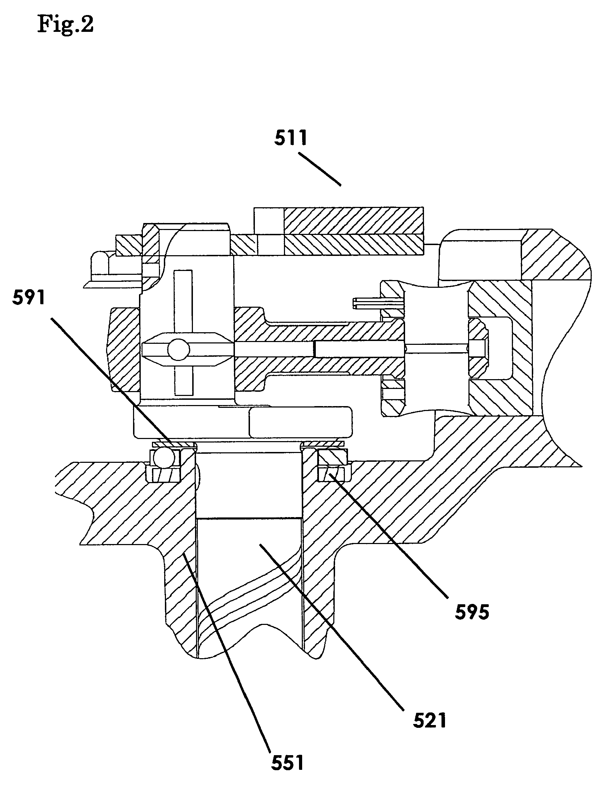

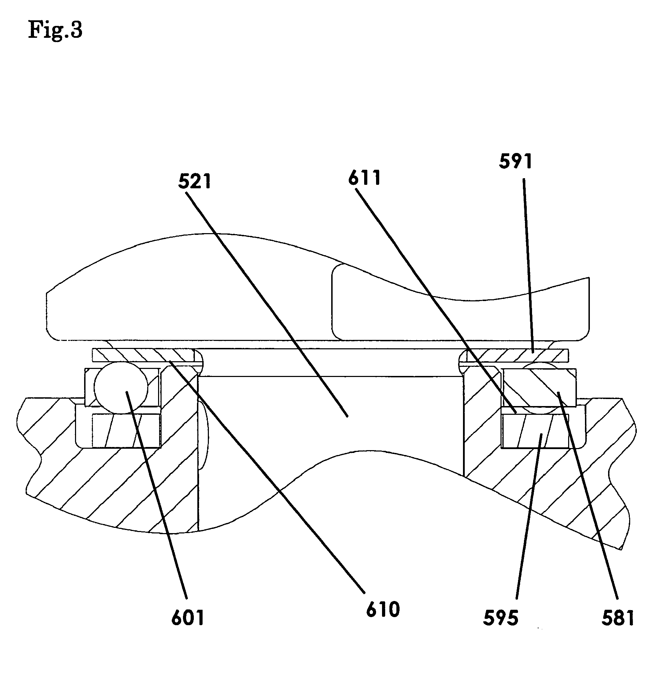

Fig.2 is an enlarged cross-sectional view of the compressor 500. Fig.3 is an enlarged cross-sectional view of a part of Fig.2. The thrust ball bearing 561 is supporting a vertical weight force produced by respective own weights of the rotor 507 and the shaft 521. The thrust ball bearing 561 comprises for example eight balls 601 retained in a circular cage 581, and a lower washer 595 contacts the bearing hub 551 of the cylinder block 541, and an upper washer 591 contacts the shaft 521. An upper surface of the upper washer contacts shaft 521 and a lower surface 610 of the upper washer 591 contacts balls 601. An upper surface 611 of a lower washer 595 also contacts the balls. In this first embodiment, the number of the balls 601 is eight, but the prior invention is not limited to this number of balls. By contrast, it is possible to select appropriate number of balls according to the present invention.

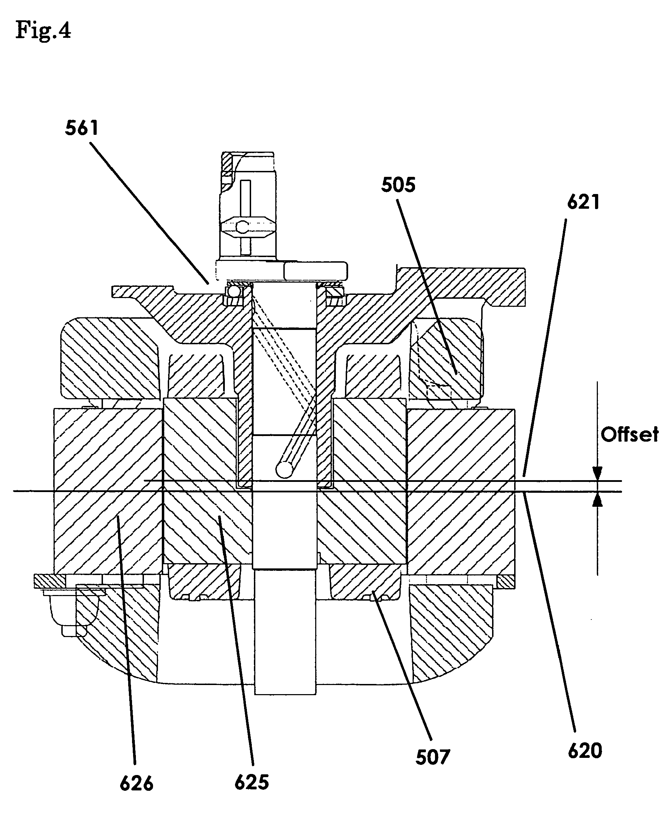

Fig.4 illustrates the first embodiment motor arrangement of the present invention. A rotor magnet center 621 is a magnetic center of the rotor 507, generally located at the center of the rotor core 625. A stator magnet center 620 is a magnetic center of the stator 505, generally located at the center of the stator core 626. The rotor magnet center 621 plane is located, offsetting from the stator magnet center 620 plane to the thrust ball bearing direction.

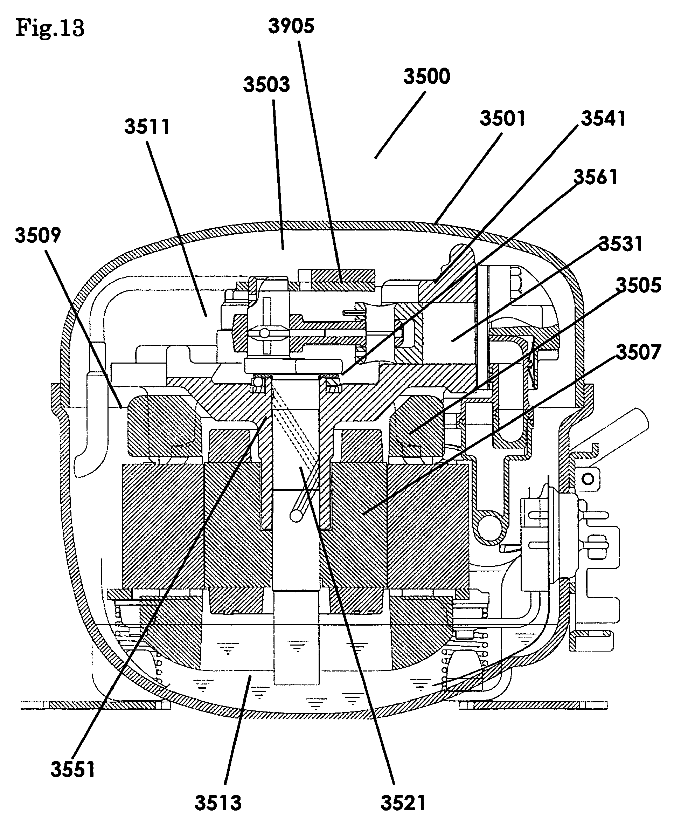

Fig.21 illustrates prior art construction, the conventional compressor 1001. A magnetic center of the rotor 107 is a rotor magnet center 201 indicated as dotted line in Fig.13, and a magnetic center of the stator 105 is a stator magnet center 205 indicated as line in Fig.13. In a conventional compressor the rotor magnet center 201 and the stator magnet center 205 are located same plane.

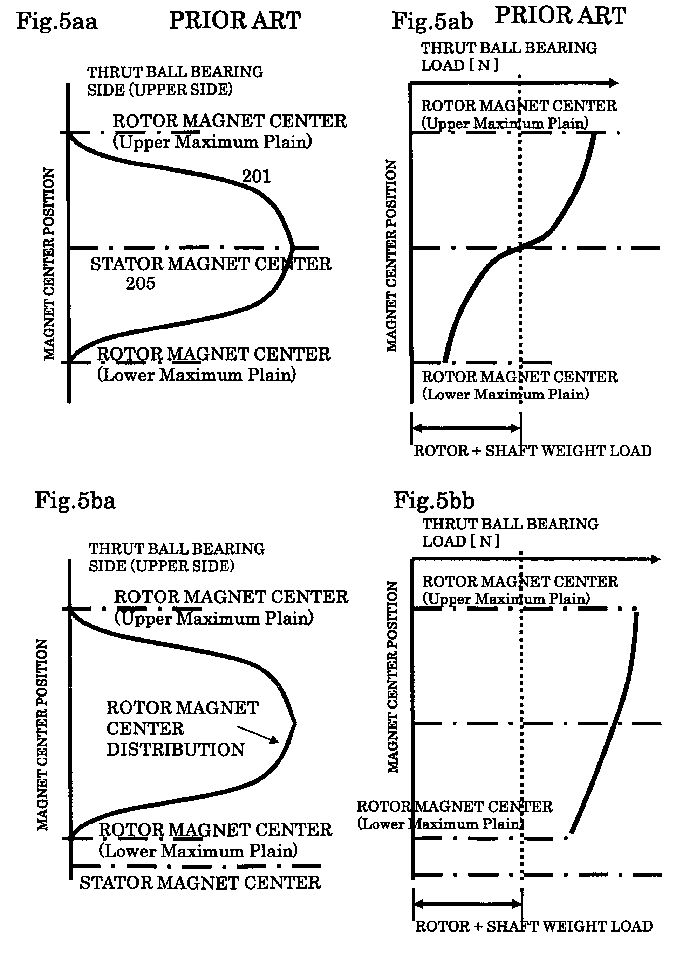

Fig.5aa illustrates, a rotor magnet center 201 distribution against the stator magnet center 205 according to the prior art. Fig.5ab illustrates, a thrust ball bearing 161 load that means the supported load by the thrust ball bearing 161 according to the prior art. According to the conventional compressor 1001, the thrust ball bearing load is sometimes reduced by the rotor location distribution. Thus the load that the balls 171 support is reduced, some of the balls 171 stop the rolling, and make solid contacts between the balls 171 and the lower surface 195B of the upper washer 191 and upper surface 191 A of the lower washer 195. The solid contacts cause the wear of the lower surface 195B and of the upper surface 191A, and also make the noise between the balls 171 and the upper washer 191 and the lower washer 195 especially according to a rotating frequency and a higher frequency.

Fig.5ba illustrates the present invention compressor 500 according to the first embodiment. Fig.5bb illustrates the present invention art of the thrust ball bearing 561 load that means the supported load by the thrust ball bearing 561. According to the invention compressor 500, the thrust ball bearing load is always beyond the load caused by the rotor 507 and the shaft 521 load. Thus the balls 601 of the thrust ball bearing 561 always keep the appropriate rolling between the upper washer 591 and the lower washer 595.

Therefore, the present invention compressor 500 does not make any wear on the lower surface 610 and the upper surface 611, and also does not make the noise at the thrust ball bearing 561 portion because of the smooth rolling of everyone of the balls 601.

The number of the balls can be selected considering the minimum load that can keep the ball rolling with the value of the weight of the rotor 507 and shaft 521.

According to the examination of the inventor, about 0.3 to 1.2 millimeters offset may be appropriate for the around 40mm height rotor core and stator core.

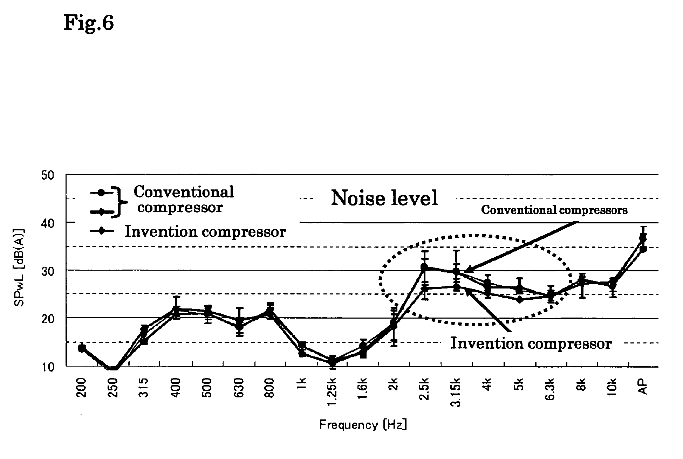

Fig.6 illustrates the invention compressor 500 noise level in comparison to the conventional compressor noise level on the 1/3 octave chart. It is found that the noise level of the invention compressor becomes low with high frequency zone.

According to the first embodiment, as the rotor magnet center 621 is positioned to the direction which is closer to the thrust bearing offsetting of the stator magnet center 620, the reliability of the thrust ball bearing 561 is increased and also the noise from the thrust ball bearing 561 is reduced.

The present invention can be made without deteriorating productivity and costs.

Although the compressor 500 of the first embodiment is a reciprocating type compressor, but the type of the compressor is not limited to this. A thrust ball bearing may be applied to an arbitrary type of compressors.

### Second Embodiment

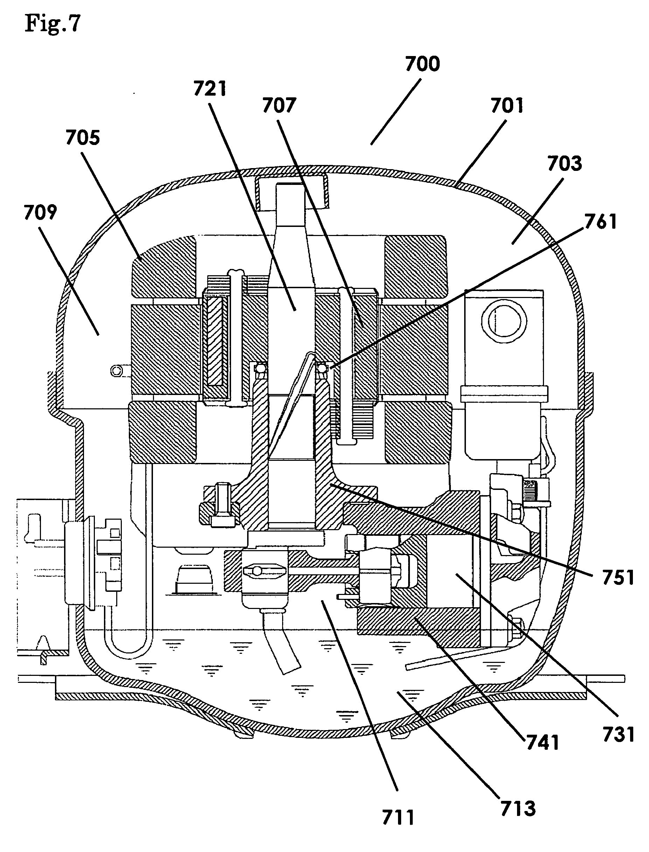

Fig.7 is a cross-sectional view of the compressor 700 according to the second embodiment of the present invention.

A hermetic container 701 accommodates an electric element 709 including a stator 705 and a rotor 707, and a compression element 711 driven by the electric element 709. The electric element 709 is connected to an electric outlet through a stating device. As to an inverter compressor, a starting device is an inverter circuit and controller.

The hermetic container 701 is filled with a refrigerant 703 and stores refrigerator oil 713 therein.

The compression element 711 includes a shaft 721 fixed with the rotor 707, a cylinder block 741 providing a compression space 731, and a bearing hub 751 that is provided on the cylinder block 741 and that axially supports the shaft 721, thus providing a reciprocating type compressor. A thrust ball bearing 761 is provided between the bearing hub 751 and the rotor 707.

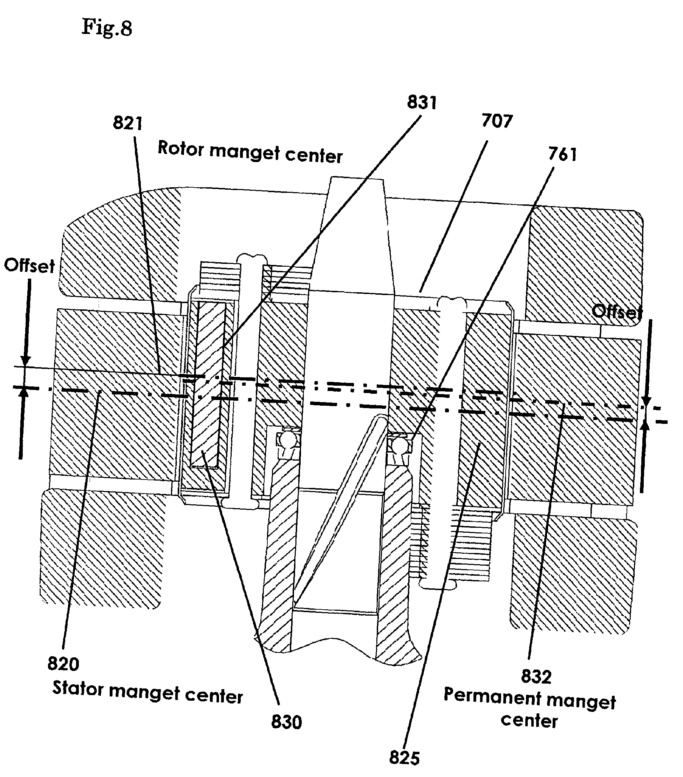

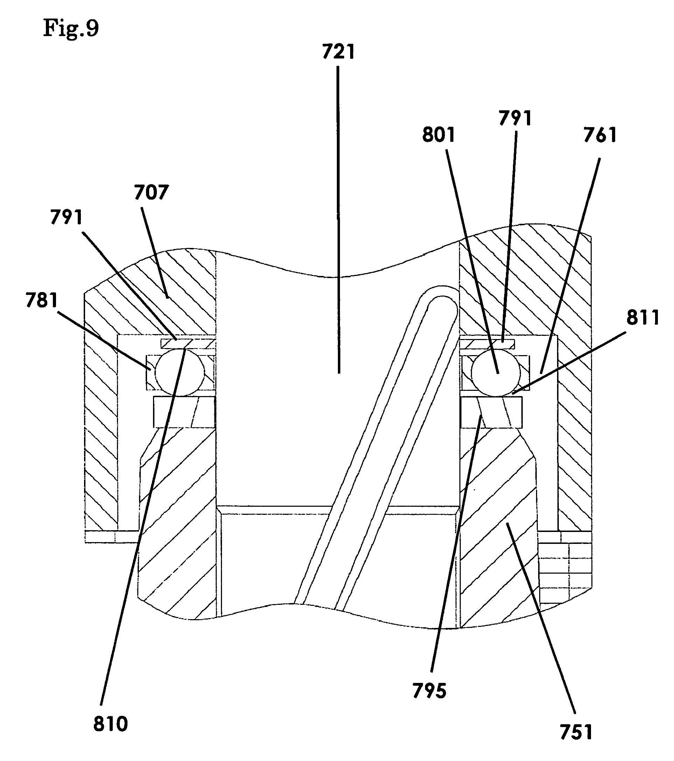

Fig.8 is an enlarged cross-sectional view of the compressor 700. Fig.9 is an enlarged cross-sectional view of a part of Fig.8. The thrust ball bearing 761 is supporting a vertical weight force produced by respective own weights of the rotor 707 and the shaft 721. The thrust ball bearing 761 comprises balls 801 retained in a circular cage 781, and an upper washer 791 is located between the rotor 707 and the thrust ball bearing 761, and a lower surface of the lower washer 795 contacts bearing hub 751 and a lower surface 810 of the upper washer 791 contacts balls 801. An upper surface 811 of a lower washer 795 also contacts the balls.

Fig.8 also illustrates the second embodiment motor arrangement of the present invention. In the second embodiment, the electric element 709 is the inverter motor, thus the rotor 707 has a permanent magnet 830 in a magnet cage 831 formed in a rotor core 825. The magnet cage 831 is a hole in order to insert the permanent magnet 830.

A rotor magnet center 821 is the magnetic center of the rotor 707. The magnet center is defined by the rotor core 825 and the permanent magnet 830 position. The permanent magnet 830 is positioned with an offset to the direction which is the opposite side of the thrust ball bearing 761, comparing to the rotor core 825 center. Thus the permanent magnet center 832 offsets from the rotor core center toward opposite side of the thrust ball bearing 761.

According to this second embodiment, the compression element 711 is located on the lower side, and the electric element 709 is located on the upper side. Thus, when the permanent magnet center 832 offsets from the rotor core center toward opposite side of the thrust ball bearing 761, it can make the additional load to the thrust ball bearing by the magnetic force.

Fig.24 illustrates a prior art construction, and specifically the conventional compressor 5001. Fig.25 and Fig.26 are an enlarged view and a cross-sectional view of a thrust ball bearing 61 of the compressor 5001, respectively.

A hermetic container 1 is filled with refrigerant 3. An electric element 9 includes a stator 5 and a rotor connected to an external power source. The hermetic container 1 accommodates electric element 9 and the compression element 11 driven by the electric element 9 and stores refrigerator oil 13 therein.

The compressing element 11 includes a shaft 21 fixed to a rotor 7, a cylinder block 41 providing a compression space 31, and a bearing hub 51 that is provided at the cylinder block 41 and that axially supports the shaft 21, thus providing a reciprocating-type compressor.

A thrust ball bearing 61 is provided between the bearing hub 51 and the shaft 21 via the rotor 7. The thrust ball bearing 61 includes balls 71, a circular cage 81 for retaining the balls 71, and an upper washer 91 and a lower washer 95 which are provided at upper and lower side of the balls 71, respectively.

An operation of the compressor 5001 will be described below.

When the stator 5 is energized by the external power source, the rotor 7 rotates together with the shaft 21. This rotation causes refrigerant gas to be compressed in the compression space 31.

The balls 71 support a load due to weight of the rotor 7 and the shaft 21 in a vertical direction, and reduce a frictional force produced between the rotor 7 and the bearing hub 51. This improves an efficiency of compressor 5001.

But the conventional compressor 5001 has a rotor magnet center 98 and a stator magnet center in a same plane that means the same vertical position.

At the conventional compressor 5001, the rotor magnet center 98 has a distribution upper and lower side of the stator magnet center 98A. It's distribution is as same as the Fig.5aa illustration but the Z axis is upside-down because the compression element 11 is located under the electric element 9, when comparing the compressor 1001 as another prior art.

Therefore, the load supported by the thrust ball bearing 61 is sometimes reduced by the rotor location distribution.

When the load that the balls 71 support is reduced, some of the balls 71 stop the rolling, and makes solid contacts between the balls 71 and the lower surface 95B of the upper washer 91 and the upper surface 91A of the lower washer 95. The solid contacts causes the wear of the lower surface 95B and the upper surface 91A, and also causes the noise between the balls 71 and the upper washer 91 and lower washer 95 especially in the rotating frequency and higher frequency areas.

The present invention, on the compressor 700, the stator 705 and the rotor 707 fixed with the shaft 721, involves a structure wherein that the compression element 711 is located lower side, and the electric element 709 is located upper side, wherein the rotor magnet center 821 is positioned to the direction which is opposite side of the thrust ball bearing 761 offsetting the stator magnetic center820. As the rotor magnet center 821 is offsetting to the direction which is opposite side of the thrust ball bearing 761, is that the permanent magnet 830 is positioned offsetting to the direction which is opposite side of the thrust ball bearing 761. Thus the permanent magnet 830 is positioned offsetting from the upper side of the rotor core 825 with the magnet cage 831.

According to the examination of the inventor, the offset may be 0.3 to 1.2 millimeters is appropriate when the rotor core and the stator core height are around 40 millimeters. And also 25 millimeters stator height inverter motor the magnet center offset may be 0.5 to 1.8 millimeters is appropriate using the offsetting of the magnet center.

Therefore the present invention compressor 700 does not make any wear on the lower surface 810 and upper surface 811, and also does not make the noise at the thrust ball bearing 761 portion because of the smooth rolling of the everyone of the balls 801, as the load of the thrust ball bearing 761 always kept beyond the load by the weight of the shaft 721 and the rotor 707 weight.

In this second embodiment, the compressor 700 is the inverter compressor with the inverter electric element 709 including the permanent magnet 830 in the rotor 707; it is also the same when the compressor is a synchronous induction compressor, which has a synchronous motor including permanent magnet in its rotor.

### Third Embodiment

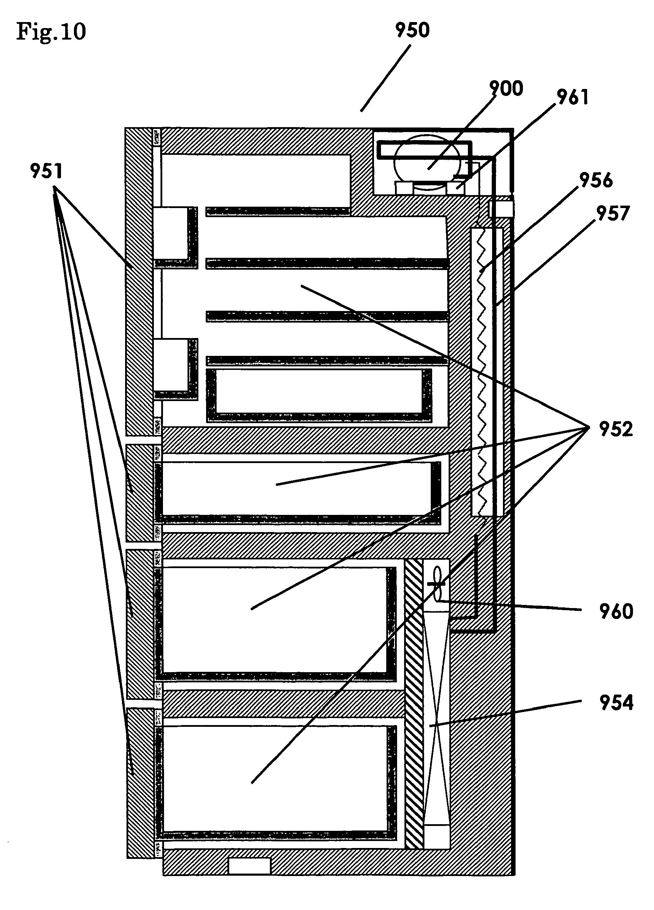

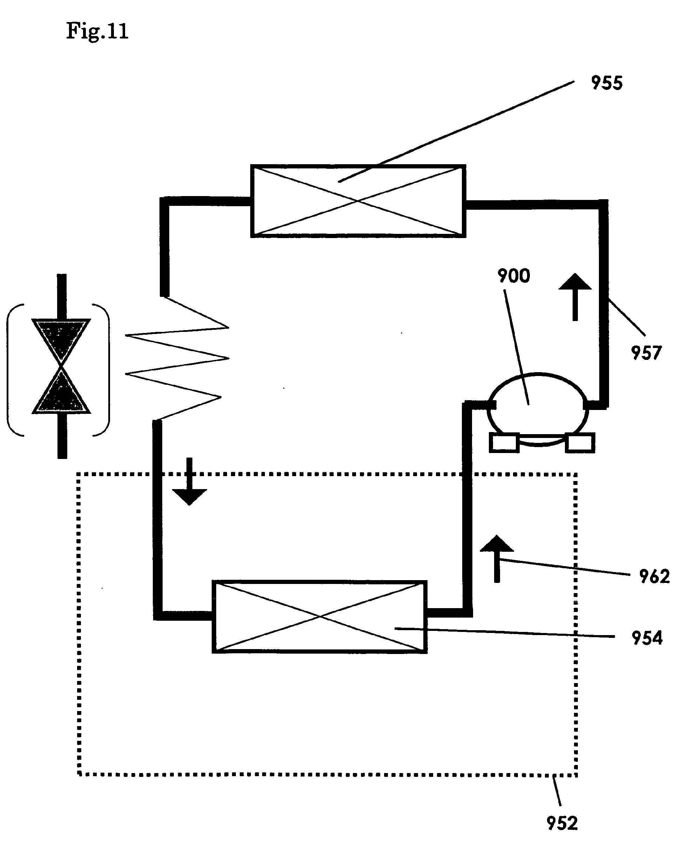

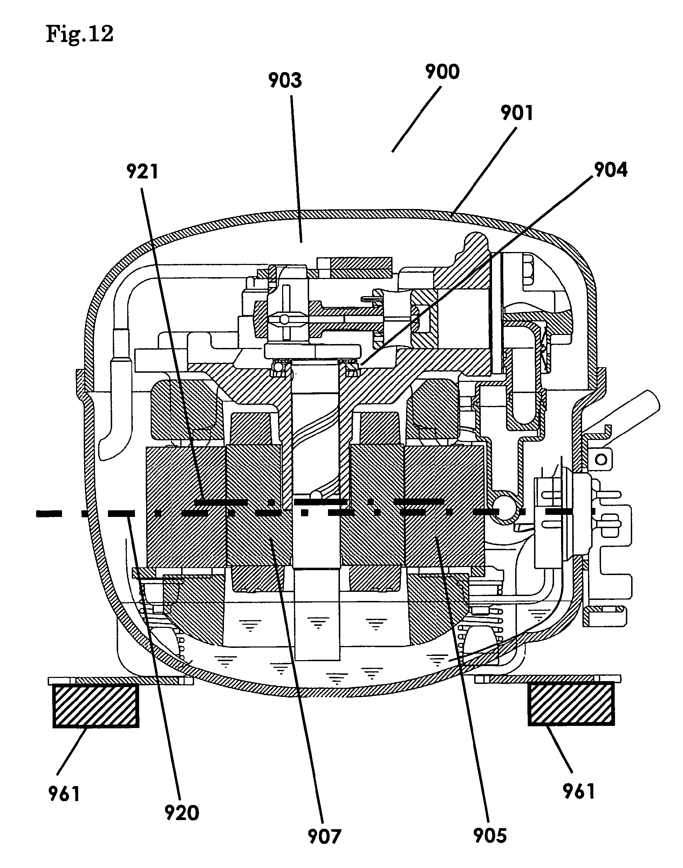

Fig.10 is a cross-sectional view of a refrigerator 950 according to the third embodiment of the present invention. Fig.11 represents the refrigeration system incorporated in the refrigerator 950 of Fig.10. Fig.12 is a cross-sectional view of a compressor with which the refrigerator 950 of Fig.10 is provided.

Referring to Fig.10, the refrigerator 950 has a cabinet 951 and doors 952 enclosing the cabinet 951. This is a multi temperature refrigerator 950, having several compartments 953. These compartments 953 are used for ice maker, chilled-freezing, fresh-food or vegetable preservation. A compressor 900 is mounted top of the refrigerator 950 with a rubber mount 961 supporting the compressor 900 on the top surface of the refrigerator 950. An evaporator 954 is mounted inside the refrigerator 950 and a fan 960 circulates the cold air to the all compartments 953.

Referring to Fig.11, this represents the refrigeration system incorporated in the refrigerator of Fig.10 in a diagrammatic form. The refrigeration system comprises a compressor 900, a condenser 955, an expansion device 956 (that usually uses a capillary tube or expansion valve), and the evaporator 954 in series connection.

These components are all well known in the art. They are connected by tubes 957, through which the gas or liquid refrigerant 903 travels as indicated by arrows 962.

Referring to Fig.12, the compressor 900 has a hermetic container 901 which accommodate an electric element 909 including a stator 905 and a rotor 907, and a compression element 911 driven by the electric element 909. The electric element 909 is connected to an electric outlet through a starting device etc... The rubber mount 961 supports the compressor 900.

The compressor 900 has a thrust ball bearing 904 and a rotor magnet center 921 is positioned offsetting from a stator magnet center 920 to the direction which grants the additional load to the thrust ball bearing 904. That additional load of thrust ball bearing 904 by the offsetting of the rotor magnet center 921 keeps the smooth rolling of the thrust ball bearing 904, and does not make the noise at the thrust ball bearing 904 by the reason explained in the first embodiment and second embodiment.

Therefore, the compressor 900 does not make any wear at the thrust ball bearing 904 portion and does not make noise from the thrust ball bearing 904 and the present invention refrigerator 950 does not cause the plug and damage on the expansion device 956 (like a capillary tube or expansion valve) by the wear powder from the thrust ball bearing 904, and also does not increase the noise from the compressor 900 caused by the damage of the thrust ball bearing 904.

Thus the present invention refrigerator 950 has the higher reliability with lower energy consumption using high efficiency compressor 900 with thrust ball bearing 904, and keeps a low noise level.

This invention is especially useful for the top mount compressor type refrigerator (which is illustrated in Fig.10). Because the compressor 900 has a high mechanical efficiency, it can reduce the electrical element height reducing the compressor 900 height, and the top mount compressor type is sensitive to the noise for a consumer. The compressor has low noise and also smaller compressor hermetic container 901 and presents high rigidity of the hermetic container 901 reducing the resonance sound of the hermetic container 901.

### Fourth Embodiment

Fig.13 is a cross-sectional view of a compressor 3500 according to the forth embodiment 4 of the present invention.

A hermetic container 3501 accommodates an electric element 3509 including a stator 3505 and a rotor 3507, and a compression element 3511 driven by the electric element 3509. The electric element 3509 is connected to an electric outlet through a stating device etc...

The hermetic container 3501 is filled with refrigerant 3503 and stores refrigerator oil 3513 therein. Recently, according to an environmental protection, it is common to use natural gases like R600a, carbon dioxide, etc. and HFC-based refrigerant like R134a, and newest HFO refrigerant like R1234yf.

The compression element 3511 includes a shaft 3521 fixed with the rotor 3507, a cylinder block 3541 providing a compression space 3531, and a bearing hub 3551 that is provided at the cylinder block 3541 and that axially supports the shaft 3521, thus providing a reciprocating-type compressor. A thrust ball bearing 3561 is provided between the bearing hub 3551 and the shaft 3521.

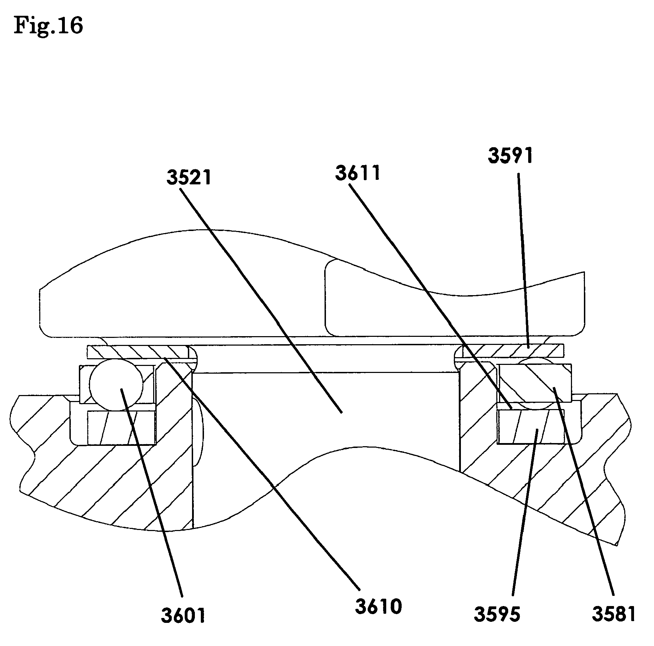

Fig.14 is an enlarged cross-sectional view of the compressor 3500. Fig.15 is a thrust ball bearing of Fig.14. Fig.16 is an enlarged cross-sectional view of a part of Fig.14. The thrust ball bearing 3561 is supporting a vertical weight force produced by respective own weights of the rotor 3507 and the shaft 3521 and other part like a balance weight 3905. The thrust ball bearing 3561 comprises nine balls 3601 retained in a circular cage 3581, and an upper washer 3591 provided on the balls 3601, and a lower washer 3595 contacting the shaft 521. An upper surface of the upper washer contacts shaft 3521 and a lower surface 3610 of the upper washer 3591 contacts balls 3601. An upper surface 3611 of a lower washer 3595 also contacts balls. In this forth embodiment, the number of the balls 3601 is nine, but the prior invention is not limited to this number of balls as an appropriate number of balls can be selected accordingly.

Through Fig.13 to 16, the weight of rotor 3507 and the shaft 3521 and the balance weight 3905 is around 1.5 kilograms. Therefore the thrust ball bearing 3561 is supporting the 1.5 kilograms weight without running condition.

Fig.14 illustrates the forth embodiment motor arrangement of the present invention. A rotor magnet center 3621 is a magnetic center of the rotor 3507, generally located at the center of the rotor core 3625. A stator magnet center 3620 is a magnetic center of the stator 3505, generally located at the center of the stator core 3626. The rotor magnet center 3621 plane is located, offsetting from the stator magnet center 3620 plane to the thrust ball bearing direction.

Fig.21 illustrates a prior art construction as the conventional compressor 1001. A magnetic center of the rotor 107 is a rotor magnet center 201 indicated as chain dotted-line in Fig.21, and a magnetic center of the stator 105 is a stator magnet center 205 indicated as a line in Fig.21. In a conventional compressor the rotor magnet center 201 and the stator magnet center 205 are located same plane.

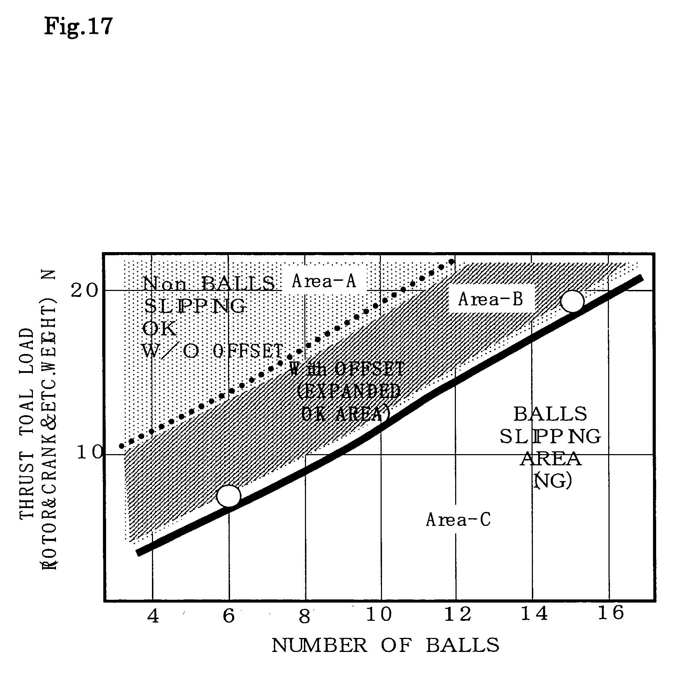

Fig.17 illustrates a ball bearing slipping test graph according to the inventor.
The Fig.17 graph shows that the balls slipping area and non-slipping area with varying the number of balls and thrust total load, and also with magnet center offset and without magnet center offset

According to inventor's experimental study, when the total thrust load below to 2 kilograms, ball slipping occurred with the number of the balls being below 10 without magnet center offsetting (that is indicated dotted line on the Fig.17). When we think of the tolerance we need to decide the number of the balls to be reduced some more.

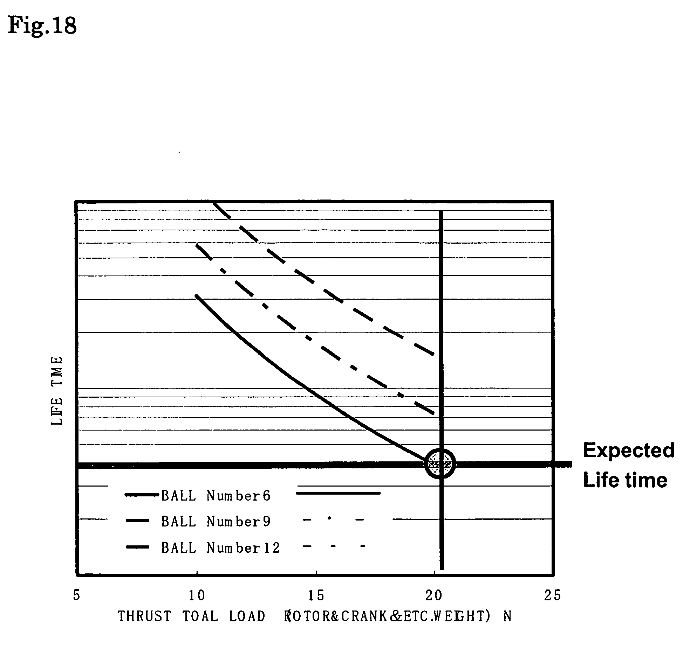

Fig. 18 illustrates the life time of the thrust ball calculation curve with the thrust load and varying number of the balls. According to the graph, when the total thrust weight is 2 kilograms, 6 balls needs to keep the expected life time (Fat horizontal solid line and solid line curve ball number 6 line). And also increasing of the number of the balls can get the expanding of the life time of the thrust balls.

In this fourth embodiment, when we reducing the weight of rotor 3507 and the shaft 3521 and the balance weight 3905 is around 1.5 kilograms, and according to the Fig.17 and Fig. 18, it is necessary to select more than 6 balls and also below 10 balls to be used in conjunction with the rotor offsetting, and also consideration of the tolerances.

In this fourth embodiment, the inventor selects the nine to twelve balls 3601 to avoid the slipping of the balls caused of the wear of the balls 3601 and the noise, and to simultaneously keep the long life time of the thrust balls 3601.

In this fourth embodiment, the compressor is a small size compressor especially used for the refrigerator. When we consider the effective resource use, it is important to reduce the compressor size. From the compressor size, it is required to set the Pitch Circle Diameter of the balls to about 20 to 30 millimeters.

In this fourth embodiment, it is used a pitch of about 25 millimeters, for example. When a Pitch Circle Diameter of the balls of about 20 to 30 millimeters is used, there is a need to consider the circular cage 3581 strength. When balls diameter of around 3.2 millimeters are used for the thrust, about 1-third to half of the area is required to keep the circular cage 3581 strength. Therefore when Pitch Circle Diameter of the balls may be about 20 to 30 millimeter and 3.2 millimeter diameter are used for the thrust ball bearing 3561. The number of the balls is from 6 to 15.

In this fourth embodiment, inventor uses the 25 millimeter pitch, and nine balls with the magnet center offset of about 0.75mm. In this inventive compressor composition, we can achieve the light weight compressor 3500 that weight is around 8 kilograms, with 1.5 kilograms rotor 3057 and the shaft 3521 and the balance weight 3905 can be achieved, and it can also be achieved the high efficiency and low noise and long reliability of life time.

Based on the inventor's experiment results as shown in Fig.17, Fig.18 ,and as mentioned above, there is obtained a compressor comprising the hermetic container 3501, the compression element 3511 and electric element 3509 accommodated in the hermetic container 3501,and the compression element 3511 being operable to compress refrigerant 3503;

The electric element 3509 including a shaft 3521 rotating as to drive the compression element 3511 at a predetermined operation frequency; and the thrust ball bearing 3561 accommodated in the hermetic container 3501, the thrust ball bearing 3561 supporting the shaft 3521 rotatably, the thrust ball bearing 3561 including a plurality of balls 3601, and the electric element 3509 comprising, the stator 3505 and the rotor 3057 fixed with shaft 3521, wherein that the compression element 3511 being located on the upper side, and the electric element located on the lower side; and wherein the rotor magnetic center 3621 is positioned to the direction which is closer to the thrust ball bearing 3561 offsetting the stator magnet center 3620, and the thrust ball bearing 3561 supports 2kilograms or less, depending on the rotor 3057 and the shaft 3521 and other parts weight, and the Pitch Circle Diameter of the balls being 3601 being 20 to 30 millimeters, and numbers of the balls 2601 being more or equal 6 , less or equal 15; It is possible to solve the conventional problems when reducing the weight and simultaneously increasing the compressor efficiency.

### Fifth Embodiment

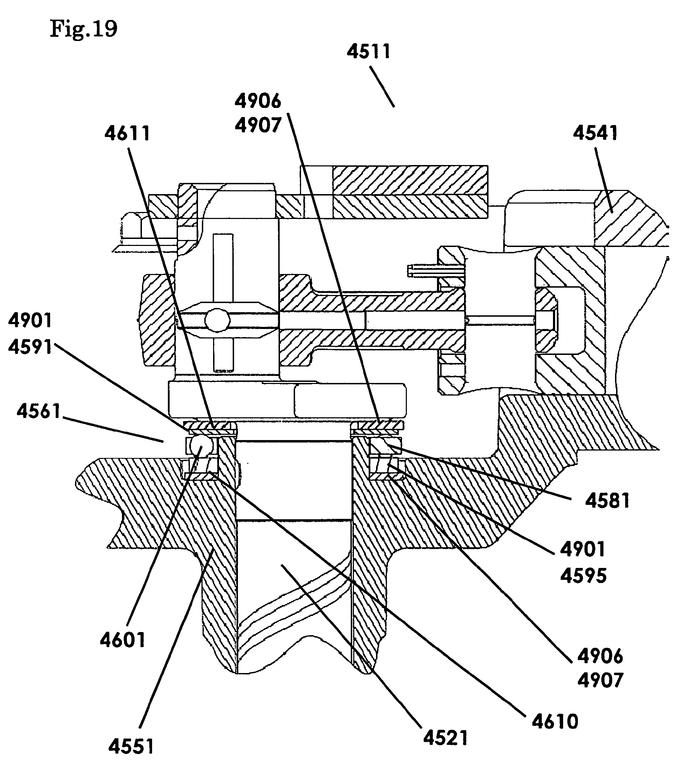

Fig.19 is a part cross-sectional view of compressor's compression element 4511 according to fifth embodiment of the present invention.

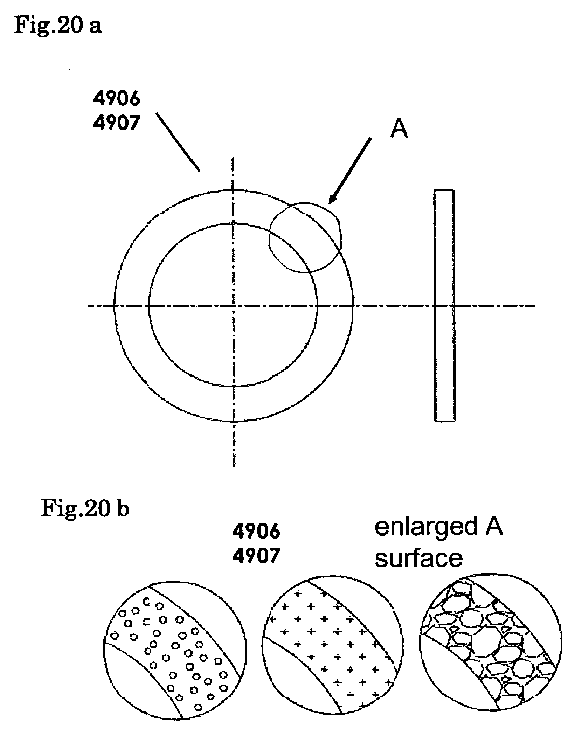

Fig 20a refers to a slipping prevents material 4906 provided in the form of a thin sheet 4907. Fig.20b is an enlarged view of the thin sheet surface.

The thrust ball bearing 4561 is supporting a vertical weight force produced by respective own weights of the rotor and the shaft 4521. The thrust ball bearing 4561 comprises, for example nine balls 4601 retained in a circular cage 4581, and an upper washer 4591 contacts the slipping prevent material 4906 using the thin sheet 4907 and thin sheet 4907 contacts the surface of the shaft 4521 surface. The lower surface 4610 of the lower washer contacts the slipping prevent material 4906 using thin sheet 4907.

The thin sheet 4907 contacts the bearing hub 4551 of the cylinder block 4541 and a lower surface 4610 of the lower washer 4595 preventing the slipping between bearing hub 4551 surface and the surface of the lower surface 4610 of the lower washer.

Fig.20a illustrates the thin sheet 4907 on of the method of the slipping preventing material 4906. The inventor makes use of a gasket utilizing the paper soaked with rubber, or thin elastic plastics made of silicon or polyamide etc...

Fig.20b illustrates the enlarged surface of the A of Fig.20a. There may also be provided dimples or cross hatching or random meshes on the thin sheet 4907 (emboss, ruggedness, crossing hatch). This leads to a quite good performance of preventing slipping between the washer 4901 and the opposite contact surface of the balls 4601.

By stopping the slipping between the washer 4901 and the opposite contact surface, the balls 4601 keep the smooth rotation, preventing the sudden stopping of rotation.

That makes improving of the thrust ball bearing reliability. Furthermore using the thin sheet 4907 like the gasket ensures an easy for assembling and also quite small usage of materials.

### INDUSTRIAL APPLICABILITY

A compressor and refrigerator according to the present invention is prevented from wear at the thrust ball bearing and reducing the noise level and its dispersion. It is applicable to a compressor used for arbitrary apparatus using a refrigerating compressor, such as an air conditioner or a freezer or heat pumps etc...

## Claims

1. A compressor comprising:
a hermetic container;
a compression element and an electric element accommodated in the hermetic container;
the compression element being operable to compress refrigerant; and
a thrust ball bearing accommodated in the hermetic container, the thrust ball bearing supporting the shaft rotatably, the thrust ball bearing including a plurality of balls;
the electric element including a shaft rotating as to drive the compression element at a predetermined operation frequency; and
a stator and a rotor fixed with the shaft,
wherein the rotor magnetic center being positioned to the direction offsetting the stator magnetic center which makes the additional load to the thrust ball bearing by the magnetic force.

2. The compressor according to claim 1,
wherein the compression element being located on the upper side, and the electric element being located on the lower side; and
wherein the rotor magnetic center being positioned to the direction which is closer to the thrust ball bearing offsetting the stator magnetic center.

3. The compressor according to claim 1,
wherein the rotor magnetic center being positioned to the direction which is on the opposite side of the thrust bearing offsetting the stator magnetic center.

4. The compressor according to one of claims 1 to 3,
wherein the electric element is a inverter motor which has a permanent magnet.

5. The compressor according to claim 4,
wherein the compression element being located on the upper side, and the electric motor located on the lower side;
and the rotor magnetic center being positioned to the direction which is closer to the thrust bearing offsetting the stator magnetic center; and
the permanent magnet being positioned with an offset to the direction which is closer to the thrust bearing.

6. The compressor according to claim 4,
wherein the compression element being located on the lower side, and the electric motor located on the upper side;
and the rotor magnetic center being positioned to the direction which is at the opposite side of the thrust bearing offsetting the stator magnetic center; and
the permanent magnet being positioned with an offset to the direction which is the opposite side of the thrust bearing.

7. The compressor according to one of claims 1 to 3,
wherein the electric element is a synchronous motor which has a permanent magnet.

8. The compressor according to claim 7,
wherein the compression element being located on the upper side, and the electric element being located on the lower side;
and the rotor magnetic center being positioned to the direction which is closer to the thrust bearing offsetting the stator magnetic center; and
the permanent magnet being positioned with an offset to the direction which is closer to the thrust bearing.

9. The compressor according to claim 7,
wherein the compression element being located on the lower side, and the electric element being located on the upper side;
and the rotor magnetic center being positioned to the direction which is the opposite side of the thrust bearing offsetting the stator magnetic center; and
the permanent magnet being positioned with an offset to the direction which is the opposite side of the thrust bearing.

10. The compressor according to claim 1 to 9,
wherein the thrust ball bearing supporting 2 kilograms or less, depending on the weight of the rotor and the shaft and other parts,
and the Pitch Circle Diameter of the ball being 20 to 30 millimeters, and the numbers of the balls being more or equal 6 , less or equal 15.

11. The compressor according to claim 1 to 10,
wherein the thrust ball bearing includes a washer which slides with the balls, and a slipping prevent material being located between the washer and a contact surface,
that is the shaft and/or the cylinder block surface etc., which usually directly contacts the washer surface.

12. The compressor according to claim 11,
wherein the slipping prevent material is a gasket made of paper and rubber composite, or a thin sheet made from plastic etc.

13. The compressor according to claim 12,
wherein the surface of the thin sheet includes the means for improving friction, like an emboss, ruggedness, crossing hatch, etc..

14. A refrigerator comprising:
the compressor as claimed in anyone of claims 1 to 13.

## Amended claims

### Amended claims in accordance with Rule 137(2) EPC.

**1.** A compressor comprising:
a hermetic container;
a compression element and an electric element accommodated in the hermetic container;
the compression element being operable to compress refrigerant;
and
a thrust ball bearing accommodated in the hermetic container,
the thrust ball bearing supporting a shaft rotatably, the thrust ball bearing including a plurality of balls;
the electric element including the shaft rotating so as to drive the compression element at a predetermined operation frequency, as well as including a permanent magnet; and
a stator and a rotor fixed with the shaft;
wherein a rotor magnet center being positioned to a direction offsetting a stator magnet center, and the permanent magnet being positioned with an offset to a rotor core center, these offsetting directions making an additional load on the thrust ball bearing by a magnetic force.

**2.** The compressor according to claim 1,
wherein the compression element being located on an upper side of the shaft, and the electric element being located on a lower side of the shaft, and
wherein the rotor magnet center being positioned to the direction which is closer to the thrust ball bearing offsetting the stator magnet center.

**3.** The compressor according to one of claims 1 or 2,
wherein the electric element is an inverter motor which has the permanent magnet.

**4.** The compressor according to claim 3,
wherein the compression element being located on the upper side of the shaft, and the electric motor located on the lower side of the shaft,
and the rotor magnet center being positioned to the direction which is closer to the thrust ball bearing offsetting the stator magnet center; and
the permanent magnet being positioned with an offset to the direction which is closer to the thrust ball bearing.

**5.** The compressor according to claim 1,
wherein the rotor magnet center being positioned to the direction which is on the opposite side of the thrust ball bearing offsetting the stator magnet center,
wherein the compression element being located on the lower side of the shaft, and the electric motor located on the upper side of the shaft;
and the rotor magnet center being positioned to a direction which is at the opposite side of the thrust ball bearing offsetting the stator magnet center; and
the permanent magnet being positioned with an offset to the direction which is the opposite side of the thrust ball bearing.

**6.** The compressor according to claim 1,
wherein the electric element is a synchronous motor which has the permanent magnet.

**7.** The compressor according to claim 6,
wherein the compression element being located on an upper side of the shaft, and the electric element being located on a lower side of the shaft;
and the rotor magnet center being positioned to the direction which is closer to the thrust ball bearing offsetting the stator magnet center; and
the permanent magnet being positioned with an offset to the direction which is closer to the thrust ball bearing.

**8.** The compressor according to claim 6,
wherein the compression element being located on a lower side of the shaft, and the electric element being located on an upper side of the shaft;
and the rotor magnet center being positioned to the direction which is the opposite of the thrust ball bearing offsetting the stator magnetic center; and
the permanent magnet being positioned with an offset to a direction which is the opposite of the thrust ball bearing.

**9.** The compressor according to claims 1 to 8,
wherein the thrust ball bearing supporting two kilograms or less, depending on the weight of the rotor, the shaft and a balance weight;
and the Pitch Circle Diameter of the ball being 20 to 30 millimeters, and the numbers of the balls being more or equal 6, less or equal 15.

**10.** The compressor according to claims 1 to 9,
wherein the thrust ball bearing includes a washer which slides with the balls,
and a slipping prevent material being located between the washer and the contact surface,
that is the shaft and/or the cylinder block surface directly contacts the washer surface.

**11.** The compressor according to claim 10,
wherein the slipping prevent material is a gasket made of paper and rubber composite, or a thin sheet made from plastic material.

**12.** The compressor according to claim 11,
wherein the surface of the thin sheet includes the means for improving friction, like an emboss, ruggedness, crossing hatch.

**13.** A refrigerator comprising:
the compressor as claimed in anyone of claims 1 to 12.
